(19) Europäisches Patentamt
European Patent Office
Office européen des brevets

(11) **EP 2 880 210 B1**

(12) **FASCICULE DE BREVET EUROPEEN**

(45) Date de publication et mention
de la délivrance du brevet:
**28.09.2016 Bulletin 2016/39**

(51) Int Cl.:
*B29L 7/00* *(2006.01)*    *B29C 35/04* *(2006.01)*
*B29C 37/00* *(2006.01)*    *B29C 67/24* *(2006.01)*
*D04H 1/04* *(2012.01)*    *D04H 1/64* *(2012.01)*
*D04H 1/425* *(2012.01)*    *D04H 1/4218* *(2012.01)*
*D04H 1/587* *(2012.01)*    *D04H 1/4266* *(2012.01)*
*D04H 1/4209* *(2012.01)*    *D04H 1/554* *(2012.01)*
*B29C 35/06* *(2006.01)*    *B29C 35/10* *(2006.01)*
*F26B 3/347* *(2006.01)*    *B29C 35/08* *(2006.01)*
*F26B 13/10* *(2006.01)*    *F26B 17/02* *(2006.01)*

(21) Numéro de dépôt: **13758913.1**

(22) Date de dépôt: **25.07.2013**

(86) Numéro de dépôt international:
**PCT/FR2013/051795**

(87) Numéro de publication internationale:
**WO 2014/020265 (06.02.2014 Gazette 2014/06)**

(54) **PROCEDE DE CUISSON D'UN MATELAS CONTINU DE FIBRES MINERALES OU VEGETALES**

VERFAHREN ZUR HÄRTUNG EINER KONTINUIERLICHEN MATTE AUS ANORGANISCHEN ODER PFLANZENFASERN

METHOD FOR CURING A CONTINUOUS MAT OF INORGANIC OR PLANT FIBRES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2012 FR 1257439**

(43) Date de publication de la demande:
**10.06.2015 Bulletin 2015/24**

(73) Titulaire: **Saint-Gobain Isover**
**92400 Courbevoie (FR)**

(72) Inventeurs:
• **NGUYEN, Christine**
**F-75014 Paris (FR)**

• **VIANEY, François**
**F-75014 Paris (FR)**
• **LETOURMY, Arnaud**
**F-60280 Margny Les Compiegne (FR)**

(74) Mandataire: **Lucas, Francois**
**SAINT-GOBAIN RECHERCHE**
**Département Propriété Industrielle**
**39, Quai Lucien Lefranc**
**93300 Aubervilliers (FR)**

(56) Documents cités:
**EP-A1- 0 000 111**    **WO-A1-88/04760**
**WO-A1-97/32118**    **WO-A1-98/04404**
**WO-A2-2011/030052**    **DE-B1- 1 560 817**
**FR-A1- 2 548 586**

**Description**

L'invention se rapporte au domaine des procédés de fabrication, plus particulièrement de cuisson d'un matelas continu de fibres minérales ou végétales, en particulier de laine minérale, de type fibre de verre ou de roche. Ces matelas sont destinés à être découpés pour former ensuite par exemple des panneaux ou rouleaux d'isolation thermique et/ou acoustique.

La fabrication de tels matelas de fibres isolantes comprend primaire-ment le fibrage et le dépôt de fibres sur un convoyeur ou transporteur mobile perforé. L'amas de fibres néoformé est plaqué sur le convoyeur à l'aide de caissons d'aspiration agencés sous le transporteur sur lequel elles sont déposées. Lors du fibrage, un liant est pulvérisé à l'état de solution ou suspension dans un liquide volatil tel que l'eau sur les fibres étirées, ce liant ayant des propriétés d'adhésivité et comprenant d'habitude une matière durcissable à chaud, comme une résine thermodurcissable, le plus souvent jusqu'à une époque récente une résine formophénolique.

La couche primaire de fibres relativement lâches sur le convoyeur collecteur est ensuite transférée à un dispositif de chauffage appelé communément dans le domaine en cause étuve de réticulation. Le matelas de fibre traverse l'étuve sur toute sa longueur, grâce à des convoyeurs perforés supplémentaires. Ce sont fréquemment deux convoyeurs sans fin en regard l'un de l'autre et espacés d'une distance ajustée pour déterminer l'épaisseur du matelas qui se forme. Chaque brin des convoyeurs est par ailleurs constitué de palettes constituées de grilles articulées entre elles et perforées pour être perméables à l'air et aux autres gaz issus du chauffage du matelas. Un tel matelas présente ainsi une densité plus ou moins importante en fonction du degré de la compression exercée par les deux transporteurs dans l'étuve.

Pendant son passage dans l'étuve, le matelas est simultanément asséché et soumis à un traitement thermique spécifique qui provoque la polymérisation (ou « durcissement ») de la résine thermodurcissable du liant présent à la surface des fibres. Ce durcissement entraîne également la réticulation des fibres les unes aux autres selon une structure tridimensionnelle (c'est-à-dire une liaison via le liant thermodurci aux points de contact entre les fibres) et ainsi la stabilisation et l'élasticité du matelas à l'épaisseur désirée, que ce soit sous l'effet d'une flexion ou d'une compression.

Le mode opératoire utilisé pour provoquer le durcissement du liant consiste à faire passer de l'air chauffé dans le matelas, de telle façon que le liant présent dans toute l'épaisseur du matelas soit porté progressivement à une température supérieure à sa température de durcissement. A cette fin, l'étuve de réticulation est composée d'une enceinte constituant une chambre fermée dans laquelle sont disposés une série de caissons alimentés par des brûleurs en air chaud mis en circulation par des ventilateurs. Chaque caisson définit ainsi une zone indépendante de chauffage, dans laquelle sont réglées des conditions spécifiques de chauffage. Les caissons sont séparés par des parois présentant des ouvertures pour le matelas et les convoyeurs supérieurs et inférieurs. L'utilisation d'une pluralité de caissons permet ainsi une élévation graduée de la température du matelas tout au long de sa traversée de l'étuve et évite l'apparition de points chauds dus à un chauffage localement trop important ou alternativement la présence au sein du matelas de zones dans lesquelles le liant n'aurait pas été entièrement polymérisé. Une étuve utilisée dans le procédé de fabrication de laine minérale comprend ainsi très couramment une multitude de caissons (par exemple entre 3 et 10), ainsi que des moyens connus permettant d'établir des conditions thermiques variables au sein de chaque caisson.

A l'heure actuelle, l'utilisation de nouveaux liants alternatifs, en remplacement des résines formo-phénoliques, rend le contrôle des conditions du procédé de cuisson du matelas de fibres dans une étuve classique telle que décrite précédemment plus difficile. De tels liants, généralement dépourvus de formaldéhyde, parfois qualifiés de « liants verts », notamment lorsqu'ils sont au moins partiellement issus d'une base de matière première renouvelable, en particulier végétale, notamment du type à base de sucres hydrogénés ou non, par exemple tel que décrit dans la les demandes WO 2009/080938 et WO 2010/029266, nécessitent le plus souvent une très bonne régulation des températures de cuisson pour atteindre l'état thermodurci, la gamme de température de cuisson étant plus étroite. Tout particulièrement le liant doit être soumis à une température comprise entre un minimum pour achever son durcissement et un maximum au-delà duquel il se dégrade rapidement, ce qui se traduit au final par des propriétés mécaniques dégradées du produit final, même après son installation. La différence entre le minimum et le maximum, en fonction du type de liant vert, peut être de l'ordre de seulement 20°C, voire moins. Le contrôle de la température dans toute l'épaisseur et toute la largeur du matelas de fibres nécessite donc de nouvelles techniques et en particulier des changements dans la conception même des étuves.

Un but de l'invention est d'avoir un procédé de fabrication permettant d'obtenir une bonne réticulation du liant dans le matelas y compris pour des liants nécessitant un contrôle précis de la température lors de la cuisson du matelas.

A cet effet, l'invention a pour objet un procédé de cuisson d'un matelas continu de fibres minérales ou végétales, notamment de type verre ou roche comprenant successivement :

- une application d'un liant dilué dans une solution aqueuse, i.e. d'une solution aqueuse contenant un liant dilué dans la solution, sur des fibres minérales ou végétales,
- une mise en forme des fibres en un matelas continu sur un convoyeur en mouvement,
- un chauffage du matelas en défilement dans une étuve par flux d'air chaud à une température supérieure à la température de durcissement du liant, dans lequel le procédé comprend en outre un séchage au moins partiel du matelas et préalable à l'entrée dans l'étuve, ledit séchage au moins partiel incluant une irradiation du matelas en défilement au moyen d'ondes électromagnétiques radiofréquences dont la fréquence est située entre 3MHz et 300GHz.

Le terme « application » recouvre généralement l'application par pulvérisation ou nébulisation en fractions de solution de liant de plus ou moins grande taille telles que des gouttelettes, ou bien l'application de flux plus ou moins continus de solution de liant en rideau ou passage dans un bain, en sorte que la solution de liant se retrouve distribuée sur tout ou partie des fibres sujettes à l'application.

Procéder à un chauffage du matelas par irradiation avant son entrée dans l'étuve conduit à un degré de réticulation plus homogène.

Il semble qu'une non-uniformité de la distribution initiale de solvant du liant tendait à créer une non-uniformité de température au moment de la cuisson.

L'irradiation du matelas par des ondes radiofréquences entre 3MHz et 300GHz, de préférence micro-ondes (300MHz à 300GHz) ou haute-fréquence (3MHz à 30MHz), permet de concentrer la puissance de séchage sur les masses d'eau les plus importantes. En outre, les ondes traversent le matelas jusqu'à ce qu'elles rencontrent de l'eau.

La présence d'eau dans le matelas est ainsi réduite et surtout uniformisée.

Un avantage d'une irradiation préalable à l'entrée dans l'étuve de cuisson est qu'il est possible de contrôler la puissance de façon à ce que la présence résiduelle d'eau à l'entrée dans l'étuve de cuisson soit optimale.

Contrôler la puissance d'irradiation permettra par exemple d'éviter une évaporation totale et ainsi par exemple préserver la mouillabilité du liant dans l'étuve (i.e. la capacité du liant à se répartir).

Suivant des modes particuliers de réalisation, le procédé inclut l'une ou plusieurs des étapes suivantes prise(s) isolément ou suivant toutes les combinaisons techniquement possibles :

- le matelas est irradié avec une puissance suffisante pour que la présence d'eau dans le matelas après séchage au moins partiel par irradiation soit inférieure à une valeur prédéterminée ;
- la puissance d'irradiation est choisie de telle sorte que la température dans le matelas pendant le séchage reste inférieure à la température de durcissement du liant ;
- la puissance d'irradiation est choisie de telle sorte qu'un écart gauche / droite de pourcentage d'eau en masse dans le matelas soit réduit au moins de 30% après irradiation ;
- l'irradiation est réalisée sur toute la largeur du matelas en défilement ;
- de l'air à une température inférieure à la température de durcissement du liant est soufflé sur le matelas dans la zone d'irradiation pour évacuer l'humidité ;
- la température de l'air chaud soufflé dans au moins un caisson de l'étuve est supérieure de 100°C au moins à la température de durcissement du liant ;
- l'air est soufflé dans l'étuve à travers le matelas ;
- la densité du matelas est comprise entre 5 et 250kg/m$^3$ ;
- l'étape d'application de ladite solution aqueuse sur les fibres minérales ou végétales est réalisée préalablement au dépôt des fibres sur ledit convoyeur;
- l'application de la solution aqueuse est une application par pulvérisation ou nébulisation en fractions de solution de liant de plus ou moins grande taille telles que des gouttelettes.

L'invention a également pour objet un procédé de fabrication d'un matelas continu de fibres minérales ou végétales comprenant une étape de fibrage avec un équipement de fibrage comprenant notamment un centrifugeur ou un ensemble de centrifugeurs, ou un rotor ou un ensemble de rotors, suivie d'un procédé de cuisson tel que décrit ci-dessus.

L'invention a encore pour objet une ligne de fabrication d'un matelas continu de fibres minérales ou végétales, notamment de type verre ou roche, comprenant :

- des moyens de fibrage pour générer des fibres minérales ou végétales,
- des moyens d'application d'un liant sur les fibres minérales ou végétales,
- des moyens de mise en forme des fibres en un matelas continu sur un convoyeur en mouvement,
- une étuve de cuisson comprenant des moyens de chauffage du matelas en défilement dans l'étuve par flux d'air chaud à une température supérieure à la température de durcissement du liant,

dans laquelle la ligne de fabrication comprend en outre en amont de l'étuve de cuisson un dispositif d'irradiation apte à irradier le matelas en défilement avec des ondes électromagnétiques radiofréquences dont la fréquence est située entre 3MHz et 300GHz.

Avantageusement, le dispositif d'irradiation comprend des moyens de soufflage d'air sec dans la zone d'irradiation pour évacuer l'humidité.

L'invention sera mieux comprise à la lecture de la description qui va suivre, fournie uniquement à titre d'exemple et faite en se référant aux dessins annexés sur lesquels :

- la figure 1 décrit une installation actuelle de fibrage d'un produit en laine de verre ;
- la figure 2 donne une représentation schématique de face d'un dispositif d'irradiation du matelas produit sur la figure 1 ;
- la figure 3 illustre schématiquement de derrière une étuve de cuisson disposée immédiatement en aval du dispositif de la figure 2 pour cuire le matelas ;
- et la figure 4 est un diagramme illustrant des expériences menées avec différents dispositifs d'irradiation émettant à des fréquences différentes, la diagramme illustrant la perte de masse des échantillons en fonction de l'énergie dissipée (i.e. énergie effective ou « non réfléchie »).

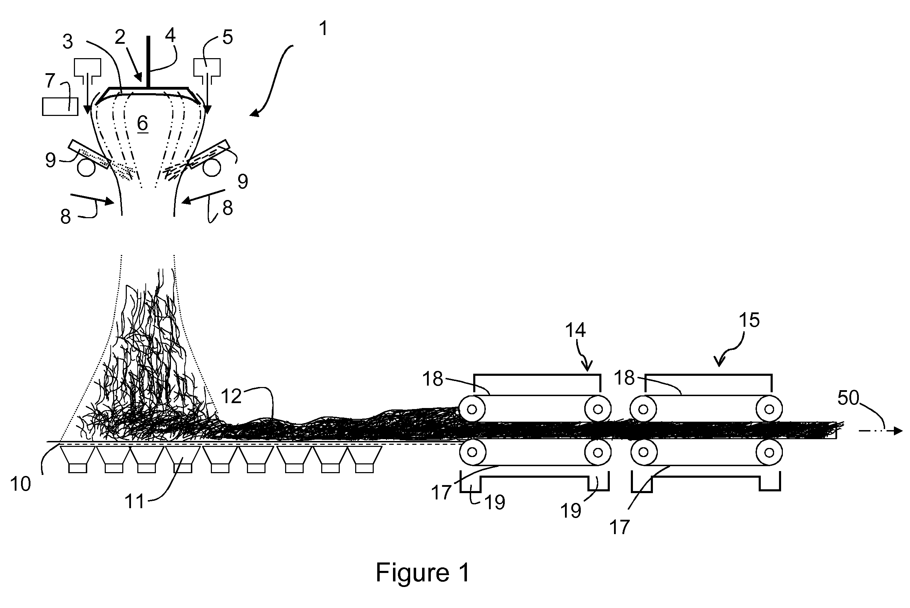

La figure 1 représente les premières étapes d'une ligne de production de produits isolants à base de laine de verre à titre d'exemple purement illustratif, étant entendu que la ligne est de tout type adapté pour la production de produits à base de fibres minérales et éventuellement végétales.

La ligne comporte une unité de fibrage 1 en soi connue, par exemple conforme au procédé de fibrage par centrifugation interne dont des exemples de réalisation sont décrits dans les demandes EP0 406 107 ou EP 0 461 995. L'unité de fibrage comporte une hotte (non représentée sur la figure 1) surmontée d'au moins un centrifugeur 2. Chaque centrifugeur comprend un panier (non représenté sur la figure 1) pour la récupération d'un filet de verre de fibrage préalablement fondu et une pièce 3 en forme d'assiette dont la paroi périphérique est munie d'un grand nombre d'orifices. En fonctionnement, le verre fondu, amené en un filet 4 depuis un four de fusion (non représenté) et d'abord récupéré dans le panier du centrifugeur, s'échappe par les orifices de l'assiette 3 sous la forme d'une multitude de filaments entraînés en rotation. Le centrifugeur 2 est par ailleurs entouré par un brûleur annulaire 5 qui crée à la périphérie de la paroi du centrifugeur un courant gazeux à grande vitesse et à température suffisamment élevée pour étirer les filaments de verre en fibres sous la forme d'un voile 6. Le fibrage selon ce procédé est intégral et produit 100% de fibres utiles. Le procédé garantit en outre des fibres longues et souples.

Des moyens de chauffage 7 par exemple du type inducteurs servent à maintenir le verre et le centrifugeur à la bonne température. Le voile 6 est refermé par un courant gazeux d'air introduit sous pression, schématisé par les flèches 8. Le tore 6 est entouré par un dispositif de pulvérisation de l'encollage contenant un liant thermodurcissable en solution aqueuse, dont seuls deux éléments 9 sont représentés sur la figure 1.

Il s'agit par exemple d'un liant phénolique ou un liant alternatif qui peut être dépourvu de formaldéhyde, liants parfois qualifiés de « liants verts », notamment lorsqu'ils sont au moins partiellement issus d'une base de matière première renouvelable, en particulier végétale, notamment du type à base de sucres hydrogénés ou non, par exemple tel que décrit dans les demandes WO 2009/080938 et WO 2010/029266.

Le fond de la hotte de fibrage est constitué par un dispositif de réception des fibres comprenant un convoyeur incorporant une bande sans fin 10 perméable aux gaz et à l'eau, sous laquelle sont disposés des caissons d'aspiration 11 des gaz tels que l'air, les fumées et les compositions aqueuses excédentaires issues du processus de fibrage précédemment décrit. Il se forme ainsi sur la bande 10 du convoyeur un matelas 12 de fibres de laine de verre mélangées intimement avec la composition d'encollage.

Le matelas 12 est conduit jusqu'à un dispositif d'irradiation 14 pour irradier le matelas 12 puis dans une étuve 15 de réticulation pour cuire ce dernier.

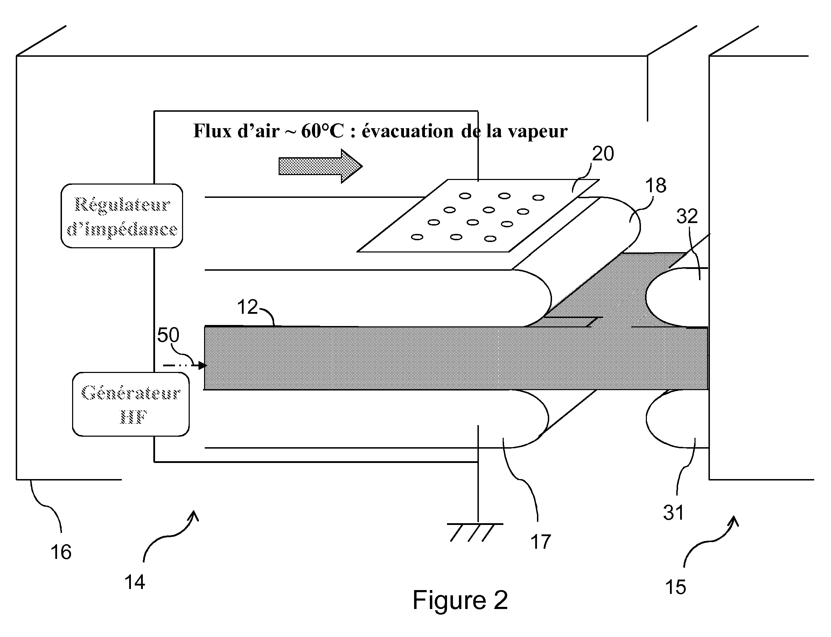

Le dispositif d'irradiation 14 est illustré plus en détail sur la figure 2.

Comme représenté schématiquement sur la figure 2 à titre d'exemple non limitatif et purement illustratif, ce dispositif 14 est entourée par une enceinte fermée 16. L'enceinte 16 est traversée par deux convoyeurs bas 17 et haut 18 de transport et de calibrage du matelas 12. Ces convoyeurs 17, 18 sont par exemple mis en rotation par des moteurs placés 19 au sol, et sont par exemple constitués, de façon connue pour les étuves de réticulation, par une succession de palettes constituées de grilles articulées entre elles et perforées pour être perméables aux gaz.

Le dispositif 14 est pourvu de moyens d'irradiation d'ondes électromagnétiques radiofréquences comprenant par exemple le convoyeur bas 17 et une plaque métallique 20 opposée. A cet effet, le convoyeur bas 17 est métallique et relié à la masse. La plaque 20 est pourvue de cavités et forme une électrode en regard du convoyeur 17 et par exemple au-dessus du convoyeur haut 18 ; lequel convoyeur 18 n'est pas métallique.

En variante cependant, le dispositif d'irradiation 14 est de tout type adapté pour irradier le matelas par des ondes électromagnétiques radiofréquences. Les électrodes sont en variante prévues par exemple sur les côtés du matelas.

L'irradiation est effectuée sur toute la largeur du matelas et absorbée au moins en partie par le matelas 12.

La puissance d'irradiation est par exemple suffisante pour évaporer entre 1% et 20 % d'eau en masse lors du passage du matelas dans le dispositif d'irradiation.

La teneur moyenne en eau du matelas avant le dispositif d'irradiation varie par exemple de 0,5 à 20% en masse. La mesure est effectuée de la façon suivante :

Un ou plusieurs échantillon(s) d'environ 50 à 80g est (sont) prélevé(s) avant le dispositif d'irradiation à plus de 20cm des bords du matelas et par exemple à différents niveaux d'épaisseur du matelas.

Chaque échantillon est d'abord pesé une première fois (valeur « masse1 »). Chaque échantillon est ensuite disposé dans une petite étuve ventilée à 105°C pendant 1h pour évaporer l'eau présente, puis placé rapidement dans un dessiccateur (enceinte sous vide) pendant 30 minutes pour abaisser sa température sans reprendre en eau. Après refroidissement à température ambiante dans le dessiccateur, la masse de chaque échantillon est mesurée à nouveau (valeur « masse2 »). Le pourcentage d'eau en masse dans l'échantillon est alors :

$$Pourcentage\ d'eau\ en\ masse = \frac{\text{masse1} - \text{masse2}}{\text{masse1}} * 100$$

Une valeur moyennée (moyenne arithmétique) du pourcentage d'eau en masse est ensuite calculée dans le cas de plusieurs échantillons.

On entend par évaporer Y% d'eau en masse que la masse en eau passe de X% qui représente le % d'eau en masse du matelas avant l'irradiation à X%-Y% après irradiation du matelas dans le dispositif.

La puissance d'irradiation est par exemple également choisie de telle sorte qu'un écart gauche / droite de pourcentage d'eau en masse dans le matelas soit réduit au moins de 30% après irradiation.

Cet écart s'entend du delta de pourcentage d'eau en masse dans le matelas entre la gauche et la droite (i.e. dans le sens de la largeur).

Pour mesurer cet écart, plusieurs échantillons (par exemple trois) d'environ 50 à 80g sont prélevés à gauche à 20cm du bord gauche du matelas et trois autres échantillons prélevés à droite à 20cm du bord droit du matelas (NB : les matelas ont une largeur de plus de 60cm). Le pourcentage d'eau en masse de chaque échantillon est mesuré selon le protocole décrit plus haut.

On obtient six valeurs de pourcentage d'eau en masse:

$$\%_{gauche\ 1},\ \%_{gauche\ 2},\ \%_{gauche\ 3}, \%_{droite\ 1},\ \%_{droite\ 2},\ \%_{droite\ 3}$$

Les moyennes arithmétiques des trois valeurs à gauche et des trois valeurs à droites sont calculées, puis leur différence en valeur absolue est calculée pour obtenir la valeur d'écart gauche / droite recherchée :

$$Ecart = \left| \frac{\%gauche\ 1 + \%gauche\ 2 + \%gauche\ 3}{3} - \frac{\%droite\ 1 + \%droite\ 2 + \%droite\ 3}{3} \right|$$

Un premier écart Ecart$_{avant}$ est mesuré avant irradiation avec les échantillons prélevés à gauche et à droite et un deuxième écart Ecart$_{après}$ est mesuré après irradiation de la même manière.

Le pourcentage de réduction d'écart est calculé par :

$$\frac{Ecart_{avant} - Ecart_{après}}{Ecart_{avant}} * 100$$

La puissance d'irradiation est encore choisie de telle sorte que la température dans le matelas pendant le séchage reste inférieure à la température de durcissement du liant, contrairement au chauffage réalisé en aval dans l'étuve de réticulation comme expliqué plus en détail ci-dessous.

La gamme de fréquence possible utilisée pour l'irradiation s'étend de 3MHz à 300 GHz (bornes comprises), plus particulièrement de 3 à 30 MHz (bornes comprises) pour les ondes haute-fréquence et de 300MHz à 300GHz (bornes comprises) pour les micro-ondes. La fréquence des ondes est par exemple de 915 ou 2450 MHz pour les micro-ondes et de 13,56 ou 27,12 MHz pour les ondes haute-fréquence.

Il s'est en effet avéré, comme le montrent les expériences ci-dessous que les ondes haute fréquence ou micro-ondes pouvaient être utilisées avec de bons résultats. En outre, les ondes haute-fréquence ont pour avantage de permettre de réaliser plus facilement que les micro-ondes une cavité de résonnance adaptée à la largeur du matelas. Les ondes haute-fréquence ont également pour avantage de poser moins de difficultés de conception pour assurer la sécurité du dispositif.

L'irradiation est associée à un soufflage d'air sec, de préférence sec et chaud, dans la zone d'irradiation du matelas pour évacuer l'humidité dégagée par l'irradiation (illustré par la flèche sur la figure 2). La température de l'air soufflé est cependant de préférence très inférieure à la température de durcissement du liant. Elle est par exemple de 60°C.

Il s'agit par exemple d'un flux d'air passant au-dessus du matelas 12 et longeant ce dernier ou encore d'un flux traversant le matelas suivant son épaisseur.

Le matelas 12 entre ensuite dans l'étuve 15 de réticulation du liant thermodurcissable.

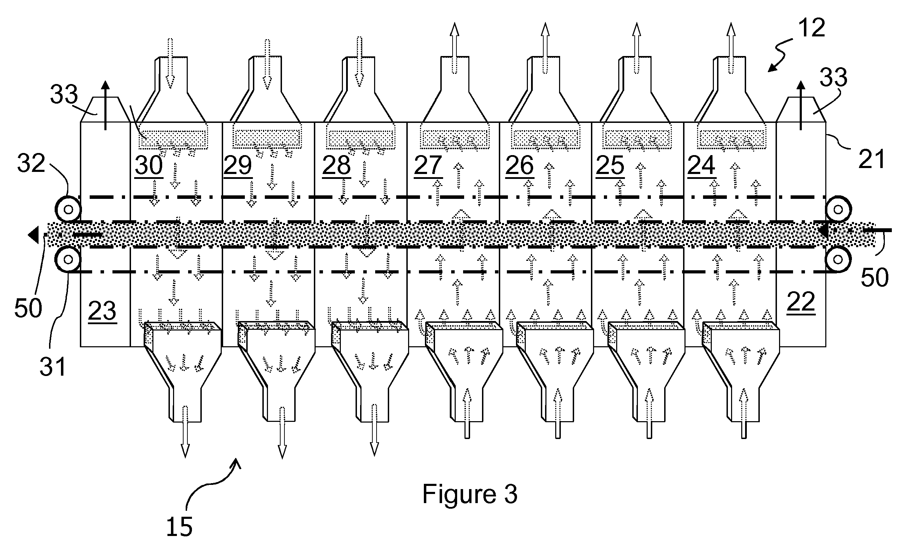

Comme représenté sur la figure 3 à titre d'exemple non limitatif et purement illustratif (l'étuve est ici vue depuis l'autre côté), cette étuve15 est entourée par une enceinte 21 fermée délimitant des sas d'entrée 22 et de sortie 23 et une série de caissons 24-30 séparés les uns des autres par des parois et individuellement alimentés en air chaud par des brûleurs mis en circulation par des ventilateurs (non représentés). L'enceinte est traversée par deux convoyeurs 31, 32 de transport et de calibrage du matelas 12. Ces convoyeurs 31, 32 sont par exemple mis en rotation par des moteurs placés au sol, et sont constitués de façon bien connue par une succession de palettes constituées de grilles articulées entre elles et perforées pour être perméables aux gaz.

Tout en assurant le passage des gaz chauds favorisant la prise rapide du liant, les convoyeurs 31, 32 compriment le matelas 12 pour lui donner l'épaisseur souhaitée. A titre d'exemple, pour un produit fini celle-ci est typiquement comprise entre 10 et 450 mm, la densité de la couche de laine de verre étant par exemple comprise entre 5 et 250 kg/m3. On distingue ainsi par exemple les produits dits de faible densité, pour lesquels la masse volumique varie entre 5 et 20 $kg/m^3$ et les produits dits de forte densité, dans lesquels la densité varie entre 20 et 250 $kg/m^3$.

Les sas d'entrée 22 et de sortie 23 débouchent sur des hottes 33 de sortie des fumées (dont le sens d'évacuation est représenté sur la figure 2 par des flèches pleines noires), ces hottes étant reliées à un circuit dédié de traitement desdites fumées (non représenté sur les figures).

Sur les figures, la circulation de l'air dans l'étuve est représentée par des flèches en pointillés. Le sens de circulation du matelas est indiqué par les flèches 50.

Dans les premiers caissons, par exemple les caissons 24-27, l'air chaud est introduit par le bas de l'étuve et évacué par le haut, après traversée du matelas. L'utilisation d'une pluralité de caissons permet la montée en température progressive du matelas de fibres jusqu'à une température supérieure à la température de durcissement du liant présent sur les fibres du matelas.

Dans les caissons suivants, par exemple les caissons 28-30, l'air chaud est cette fois introduit par le haut de l'étuve et évacué par le bas.

Les fumées supplémentaires générées dans les caissons sont finalement évacuées dans le sas de sortie 23, via la hotte 33.

D'une manière générale, la température de l'air chaud soufflé dans l'étuve dans les caissons 24-30 est supérieure de 100° au moins à la température de durcissement du liant, par exemple un air chaud entre 180°C et 300°C

## *RESULTATS D'EXPERIENCES*

Des échantillons de matelas de laine de verre humides prélevés juste après formage (i.e. avant cuisson) ont été soumis à des séquences d'irradiations de fréquence 27,12MHz, 915MHz et 2450MHz au sein de prototypes industriels.

Pour chacune des séquences 1 à 5, un échantillon de 300mm x 300mm a été prélevé et soumis à plusieurs expositions et mesures successives.

Chaque échantillon a été irradié jusqu'à assèchement complet (i.e. stabilisation de la masse) avec entre chaque irradiation une mesure de masse intermédiaire.

Quand ceci était possible, l'évolution de la température (i.e. température au démarrage de l'irradiation et à la fin indiquées entre crochets) à coeur de l'échantillon a été mesurée en un point par fibre optique.

Pour chaque séquence, on indique la masse d'eau restante, c'est-à-dire la masse de l'échantillon à laquelle on a soustrait sa masse finale.

**1ère séquence : exposition d'un échantillon à une puissance effective (non réfléchie) de 2kW à 2450MHz**

Tableau 1

| Durée totale d'exposition (s) | Puissance effective (kW) | Masse d'eau restante (g) | Plage de température (°C) |
|---|---|---|---|
| 0 | - | 17 | |
| 20 | 2 | 8 | [25, 60] |
| 40 | 2 | 2 | [48, 72] |
| 100 | 2 | 0 | [38, 70] |
| 160 | 2 | 0 | [45, 60] |

**2ème séquence : exposition d'un échantillon à une puissance effective de 4kW à 2450MHz**

Tableau 2

| Durée totale d'exposition (s) | Puissance effective (kW) | Masse d'eau restante (g) | Plage de température (°C) |
|---|---|---|---|
| 0 | - | 30 | - |
| 20 | 4 | 10 | [23, 95] |
| 140 | 4 | 0 | [70, 102] |

**3ème séquence : exposition d'un échantillon à une puissance effective de l'ordre 2kW à 27,12MHz**

Tableau 3

| Durée totale d'exposition (s) | Puissance effective (kW) | Masse d'eau restante (g) |
|---|---|---|
| 0 | - | 26 |
| 40 | 2,23 | 8 |
| 160 | 1,74 | 2 |
| 400 | 2,45 | 0 |

**4ème séquence : exposition d'un échantillon à une puissance effective de 2,5kW à 27,12MHz**

Tableau 4

| Durée totale d'exposition (s) | Puissance effective (kW) | Masse d'eau restante (g) |
|---|---|---|
| 0 | - | 44 |
| 20 | 2,50 | 30 |
| 40 | 2,50 | 18 |
| 60 | 2,50 | 9 |
| 180 | 2,50 | 0 |

**5ème séquence : exposition d'un échantillon à une puissance émise (puissance effective non mesurée) de l'ordre de 2,5kW à 27,12MHz**

Tableau 5

| Durée totale d'exposition (s) | Puissance émise (kW) | Masse d'eau restante (g) |
|---|---|---|
| 0 | - | 23 |
| 14 | 3 | 15 |
| 74 | 1 | 6 |
| 134 | 1 | 0 |

**6ème séquence : test d'homogénéisation avec exposition à une puissance effective de 2,48kW à 27,12MHz**

Pour ce test, un échantillon de 300mm x 300mm a été découpé en deux moitiés aspergées artificiellement d'eau de manière différente, afin de créer deux concentrations distinctes. Les échantillons ont ensuite été introduits dans le système haute-fréquence pendant 50s, menant aux pertes de masse suivantes.

Tableau 6

| Durée totale d'exposition (s) | Puissance effective (kW) | Masse de la 1ère moitié (g) | Masse de la 2ème moitié (g) |
|---|---|---|---|
| 0 | - | 97 | 119 |
| 50 | 2,48 | 83 | 95 |

**7ème séquence : test d'homogénéisation avec exposition à 2450MHz**

Pour ce test, deux échantillons de 210mm x 105mm ont été découpés dans des matelas dont seul le taux d'humidité diffère, l'échantillon 2 étant plus humide que l'échantillon 1. Ils ont été placés ensemble dans un dispositif d'irradiation micro-onde et soumis à la même irradiation (i.e. 900W de puissance émise) à des temps d'irradiations successifs.

Les deux échantillons ont été pesés après chaque temps d'irradiation. Les résultats sont placés dans le tableau ci-dessous :

Les teneurs en eau sont les pourcentages d'eau en masse exprimés dans une base ayant pour référence la base 100.

La base 100 correspond au pourcentage initial d'eau en masse dans l'échantillon 1 ($Teneur_{initiale\ échantillon1}$).

Une valeur de X dans la base 100 correspond donc à une teneur en eau de X% de $Teneur_{initiale\ échantillon\ 1}$.

Tableau 7

| Temps d'exposition (s) | teneur eau Echantillon 1 (base 100) | teneur eau Echantillon 2 (base 100) |
|---|---|---|
| 0 | 100 | 179 |
| 15 | 83 | 151 |
| 30 | 81 | 135 |
| 45 | 78 | 129 |
| 60 | 77 | 123 |
| 75 | 77 | 122 |
| 90 | 76 | 121 |
| 150 | 70 | 113 |

→ **Analyse d'efficacité de séchage**

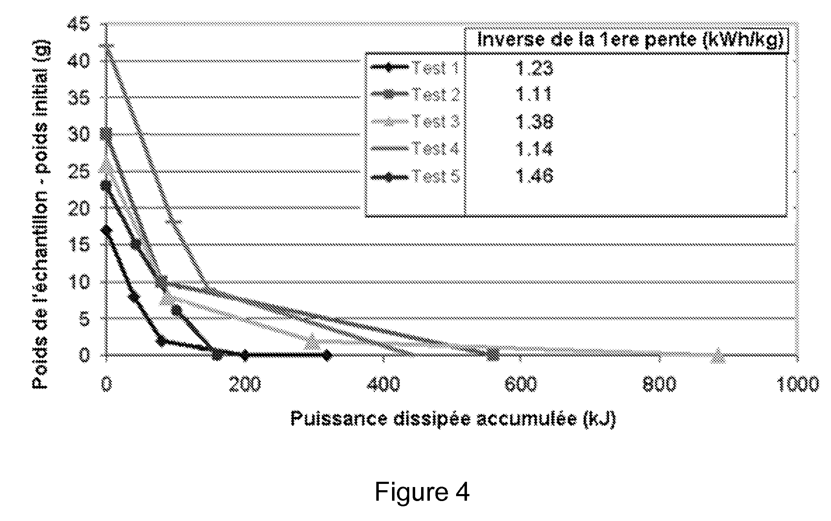

Les tests menés mettent en évidence la possibilité de sécher les échantillons de laine de verre avec les différentes fréquences utilisées, et permettent d'évaluer une efficacité minimale (en kWh de puissance effective par kg d'eau évaporée) que l'on peut espérer obtenir avec ce type de four. Ces valeurs sont indiquées sur la figure 4, où la perte de masse des échantillons est représentée en fonction de l'énergie effective dissipée.

En prenant en compte une partie de chauffe du matériau, il semble raisonnable d'estimer aux alentours de 0.9 kWh / kg d'eau l'énergie nécessaire à l'évaporation. Nos essais démontrent donc une efficacité minimale de séchage de 60 à 90 % pour les différentes fréquences.

→ **Analyse d'efficacité de cuisson**

Dans l'ensemble des essais menés, il n'a pas été possible de mesurer une température de matériau supérieure à 105°C. De même, les échantillons n'ont pas montré de traces de polymérisation (qui prend place bien au-delà de 100°C). Il semble donc que la cuisson des échantillons soit moins évidente que leur séchage.

Par ailleurs, il est à noter que le taux de liant a également été mesuré sur certains matelas cuits sans irradiation comme sur des matelas irradiés et cuits correspondants ce qui a permis de vérifier que le taux de liant restait constant et que l'irradiation n'impactait pas le liant.

→ **Analyse d'homogénéisation**

La séquence 6 de test d'homogénéisation montre une réduction de masse de 20% (respectivement contre 14%) pour l'échantillon le plus humide (respectivement pour l'échantillon le moins humide). On observe une homogénéisation.

La séquence 7 de test d'homogénéisation montre que l'évaporation est plus importante et plus rapide lorsque l'échantillon est plus humide, soit l'échantillon 2.

On montre également que l'écart d'humidité entre les deux échantillons a été réduit de 46%.

*Ecart temps 0s : 79*
*Ecart temps 150s : 43*

Soit $\frac{79-43}{79} * 100 = 46\%$

**Revendications**

1. Procédé de cuisson d'un matelas continu (12) de fibres minérales ou végétales, notamment de type verre ou roche comprenant successivement :

   - une application d'une solution aqueuse contenant un liant dilué dans la solution, sur des fibres minérales ou végétales,
   - une mise en forme des fibres en un matelas continu (12) sur un convoyeur (10) en mouvement,
   - un chauffage du matelas (12) en défilement dans une étuve (15) par flux d'air chaud à une température supérieure à la température de durcissement du liant,

   dans lequel le procédé comprend en outre un séchage au moins partiel du matelas (12) et préalable à l'entrée dans l'étuve (15), ledit séchage au moins partiel incluant une irradiation du matelas (12) en défilement au moyen d'ondes électromagnétiques radiofréquences dont la fréquence est située entre 3MHz et 300GHz.

2. Procédé selon la revendication 1, dans lequel le matelas (12) est irradié avec une puissance suffisante pour que la présence d'eau dans le matelas (12) après séchage au moins partiel par irradiation soit inférieure à une valeur prédéterminée.

3. Procédé selon la revendication 1 ou 2, dans lequel la puissance d'irradiation est choisie de telle sorte que la température dans le matelas (12) pendant le séchage reste inférieure à la température de durcissement du liant.

4. Procédé selon l'une quelconque des revendications précédentes, dans lequel la puissance d'irradiation est choisie de telle sorte qu'un écart gauche / droite de pourcentage d'eau en masse dans le matelas (12) soit réduit au moins de 30% après irradiation.

5. Procédé selon l'une quelconque des revendications précédentes, dans lequel l'irradiation est réalisée sur toute la largeur du matelas (12) en défilement.

**6.** Procédé selon l'une quelconque des revendications précédentes, dans lequel de l'air à une température inférieure à la température de durcissement du liant est soufflé sur le matelas (12) dans la zone d'irradiation pour évacuer l'humidité.

**7.** Procédé selon l'une quelconque des revendications précédentes, dans lequel la température de l'air chaud soufflé dans au moins un caisson (24-30) de l'étuve (15) est supérieure de 100°C au moins à la température de durcissement du liant.

**8.** Procédé selon l'une quelconque des revendications précédentes, dans lequel l'air est soufflé dans l'étuve (15) à travers le matelas.

**9.** Procédé selon l'une quelconque des revendications précédentes, dans lequel la densité du matelas (12) est comprise entre 5 et 250kg/m$^3$.

**10.** Procédé de fabrication d'un matelas continu de fibres minérales ou végétales comprenant une étape de fibrage avec un équipement de fibrage comprenant notamment un centrifugeur (2) ou un ensemble de centrifugeurs, ou un rotor ou un ensemble de rotors, suivie d'un procédé de cuisson selon l'une quelconque des revendications précédentes.

**Patentansprüche**

**1.** Verfahren zur Aushärtung einer Endlosbahn (12) aus Mineralfasern oder pflanzlichen Fasern, insbesondere vom Typ Glas oder Stein, aufeinander abfolgend enthaltend

- ein Aufbringen einer wässrigen Lösung eines in der Lösung verdünnten Bindemittels auf die Mineralfasern oder pflanzlichen Fasern
- eine Formgebung der Fasern zu einer Endlosbahn (12) auf einem bewegten Förderer (10)
- eine Aufheizung der durchlaufenden Bahn (12) in einem Ofen (15) durch einen Heißluftstrom bei einer höheren Temperatur als der Aushärtetemperatur des Bindemittels,

wobei das Verfahren außerdem eine wenigstens teilweise Trocknung der Bahn (12) aufweist, die vor dem Eintritt in den Ofen (15) erfolgt, und wobei diese wenigstens teilweise Trocknung eine Bestrahlung der durchlaufenden Bahn (12) mittels elektromagnetischer Radiowellen umfasst, deren Frequenz im Bereich zwischen 3 Mhz und 300 GHz liegt.

**2.** Verfahren nach Anspruch 1, bei dem die Bahn (12) mit einer Leistung bestrahlt wird, die ausreicht, dass der Wassergehalt in der Bahn (12) nach der Trocknung unterhalb eines vorgegebenen Wertes liegt.

**3.** Verfahren nach Anspruch 1 oder 2, bei dem die Bestrahlungsleistung derart gewählt wird, dass die Temperatur in der Bahn (12) während der Trocknung unterhalb der Aushärtetemperatur des Bindemittels bleibt.

**4.** Verfahren nach einem der vorherigen Ansprüche, bei dem die Bestrahlungsleistung derart gewählt wird, dass ein Unterschied des massebezogenen Wassergehalts zwischen links und rechts in der Bahn (12) um wenigstens 30% nach der Bestrahlung verringert ist.

**5.** Verfahren nach einem der vorherigen Ansprüche, bei dem die Bestrahlung über die gesamte Breite der Bahn (12) vorgenommen wird.

**6.** Verfahren nach einem der vorherigen Ansprüche, bei dem Luft mit einer niedrigeren Temperatur als die Aushärtetemperatur des Bindemittels auf die Bahn (12) im Bereich der Bestrahlung geblasen wird, um die Feuchtigkeit abzuführen.

**7.** Verfahren nach einem der vorherigen Ansprüche, bei dem die Temperatur der in mindestens einem Caisson (24-30) des Ofens (15) eingeblasenen Heißluft um mindestens 100°C höher als die Aushärtetemperatur des Bindemittels ist.

**8.** Verfahren nach einem der vorherigen Ansprüche, bei dem die Luft im Ofen (15) durch die Bahn hindurch geblasen wird.

9.  Verfahren nach einem der vorherigen Ansprüche, bei dem die Dichte der Bahn (12) zwischen 5 und 250 kg/m$^3$ beträgt.

10. Verfahren zur Herstellung einer Endlosbahn aus Mineralfasern oder pflanzlichen Fasern, aufweisend einen Zerfaserungsschritt mit einer Zerfaserungseinrichtung, insbesondere aufweisend ein Schleuderorgan (2) oder eine Mehrzahl von Schleuderorganen, oder einen Rotor oder eine Mehrzahl von Rotoren, gefolgt von einem Aushärteverfahren nach einem der vorherigen Ansprüche.

**Claims**

1.  A method for baking a continuous mat (12) of mineral or plant fibers, in particular of the glass or rock type, successively comprising:

    - application of an aqueous solution, containing a binder diluted in the solution, onto mineral or plant fibers,
    - shaping of the fibers to form a continuous mat (12) on a conveyor (10) in motion,
    - heating of the mat (12) in movement through an oven (15) by a hot air flow at a temperature higher than the curing temperature of the binder,

    wherein the method furthermore comprises at least partial drying of the mat (12) before entry into the oven (15), said at least partial drying including irradiation of the mat (12) in movement with radiofrequency electromagnetic waves whose frequency lies between 3 MHz and 300 GHz.

2.  The method as claimed in claim 1, wherein the mat (12) is irradiated with a sufficient power so that the presence of water in the mat (12) after at least partial drying by irradiation is less than a predetermined value.

3.  The method as claimed in claim 1 or 2, wherein the irradiation power is selected in such a way that the temperature of the mat (12) during the drying remains less than the curing temperature of the binder.

4.  The method as claimed in any one of the preceding claims, wherein the irradiation power is selected in such a way that the left/right difference in percentage of water by mass in the mat (12) is reduced to less than 30% after irradiation.

5.  The method as claimed in any one of the preceding claims, wherein the irradiation is carried out over the entire width of the mat (12) in movement.

6.  The method as claimed in any one of the preceding claims, wherein air at a temperature less than the curing temperature of the binder is blown onto the mat (12) in the irradiation zone in order to remove the moisture.

7.  The method as claimed in any one of the preceding claims, wherein the temperature of the hot air blown into at least one compartment (24-30) of the oven (15) is at least 100°C higher than the curing temperature of the binder.

8.  The method as claimed in any one of the preceding claims, wherein the air is blown into the oven (15) through the mat.

9.  The method as claimed in any one of the preceding claims, wherein the density of the mat (12) lies between 5 and 250 kg/m$^3$.

10. A method for manufacturing a continuous mat of mineral or plant fibers comprising a step of fibering with fibering equipment comprising, in particular, a centrifuge (2) or a set of centrifuges, or a rotor or a set of rotors, followed by a baking method as claimed in any one of the preceding claims.

Figure 1

EP 2 880 210 B1

**Flux d'air ~ 60°C : évacuation de la vapeur**

20

18

32

Régulateur
d'impédance

12

50

Générateur
HF

16

14

17

31

15

Figure 2

Figure 3

Figure 4

**EP 2 880 210 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2009080938 A
- WO 2010029266 A
- EP 0406107 A
- EP 0461995 A